# EUROPÄISCHE PATENTSCHRIFT

(11) **EP 0 804 019 B1**
(45) Veröffentlichungstag und Bekanntmachung des Hinweises auf die Patenterteilung: **24.07.2002**
(21) Anmeldenummer: 97106150.2
(22) Anmeldetag: 15.04.1997
(51) Int. Cl.: H04N 3/20, H04N 5/57

(54) **Schaltung zur Begrenzung des Strahlstroms einer Bildröhre**
Circuit for limiting the beam current of a picture tube
Circuit pour la limitation du courant de faisceau d'un tube image

(30) Priorität: 24.04.1996 DE 19616272
(43) Veröffentlichungstag der Anmeldung: 29.10.1997
(73) Patentinhaber: DEUTSCHE THOMSON-BRANDT GMBH, 78048 Villingen-Schwenningen (DE)
(72) Erfinder: Dieterle, Franz, 77761 Schiltach (DE); Läufer, Martin, 78052 Villingen-Schwenningen (DE)

(56) Entgegenhaltungen:
- US-A- 4 001 503
- PATENT ABSTRACTS OF JAPAN vol. 016, no. 403 (E-1254), 26.August 1992 & JP 04 134973 A (MITSUBISHI ELECTRIC CORP), 8.Mai 1992,

## Beschreibung

Die Erfindung geht aus von einer Schaltung zur Begrenzung des Strahlstroms einer Bildröhre in einem Fernsehempfänger gemäß dem Oberbegriff des Anspruchs 1.

In einem Fernsehempfänger ist es bekannt und notwendig, zum Schutz der Bildröhre und des Hochspannungstransformators den in der Bildröhre fließenden Strahlstrom zu begrenzen. Bei einem zu hohen Strahlstrom über einen längeren Zeitraum ist die garantierte Lebensdauer der Bildröhre gefährdet, während im Hochspannungstransformator insbesondere die zusammen mit den Wicklungen vergossenen Hochspannungsgleichrichterdioden durch eine zu hohe Temperatur zerstört werden können.

Bei Schaltungen zur Begrenzungen des Strahlstroms ist im allgemeinen nur eine Begrenzerfunktion wirksam. Um kurzzeitig auftretende weiße Bildstellen mit ausreichender Helligkeit darzustellen, wird der Begrenzungswert so eingestellt, daß er oberhalb des Strahlstroms liegt, mit dem die Bildröhre im Dauerbetrieb belastet werden darf, ohne Schaden zu nehmen. Im Normalbetrieb mit bewegten Bildern liegt der Langzeitmittelwert (long term average) immer unterhalb dieser Maximalbegrenzung des Strahstroms, da es zwischendurch auch dunkle Szenen gibt, in der die Begrenzung nicht wirksam ist. Ein Dauerbetrieb mit aktiver Strahlstrombegrenzung ist jedoch theoretisch möglich.

Bei der Bemessung der Strahlstrom-Begrenzungsschaltung muß ein extremer Belastungsfall berücksichtigt werden. Dieser tritt z.B. auf, wenn der Fernsehempfänger bei einer Umgebungstemeperatur von +40°C über mehrere Stunden mit vollkommen weißem Bild unter extrem schlechten Kühlungsbedingungen wie z.B. in einem Regal betrieben wird. Auch in diesem extremen Belastungsfall dürfen die Grenzwerte für den Hochspannungstransformator nicht überschritten werden. Der genannte extreme Belastungsfall tritt zwar in der Praxis bei einem Gerät sehr selten oder sogar niemals auf. Die Notwendigkeit seiner Berücksichtigung in der Bemessung der Strahlstrombegrenzung engt jedoch den Spielraum für den maximal zulässigen Strahlstrom bei normalen bewegten Bildern ein. Mit anderen Worten: Wenn es den genannten extremen Belastungsfall mit Sicherheit nicht gäbe, könnte bei normalen bewegten Bildern ein höherer Strahlstrom zugelassen und somit ein helleres Bild erzielt werden.

Aus der *US-A 4 001 503* ist eine Anordnung bekannt, welche die Überhitzung von Komponenten eines Fernsehgerätes verhindert. Zu diesem Zweck ist bei der bekannten Anordnung im Inneren des Fernsehgerätes ein temperaturabhängiger Widerstand vorgesehen, dessen Widerstand sich ändert, wenn die Temperatur im Inneren des Fernsehgerätes ansteigt. Ab einem vorbestimmten Temperaturwert wird der durchschnittliche Strahlstrom verringert, um zu verhindern, daß die Temperatur in dem Fernsehgerät über einen bestimmten Wert ansteigt.

Der Erfindung liegt die Aufgabe zugrunde, einen höheren Strahlstrom für weiße Bildstellen und somit ein helleres Bild zu ermöglichen, ohne daß dadurch in dem genannten extremen Belastungsfall der Hochspannungstransformator gefährdet ist. Diese Aufgabe wird durch die im Anspruch 1 angegebene Erfindung gelöst. Vorteilhafte Weiterbildungen der Erfindung sind in den Unteransprüchen angegeben.

Die Erfindung besteht somit darin, daß der Transformator einen Temperaturfühler enthält, der oberhalb einer bestimmten Temperatur auf die Steuerschaltung für den Strahlstrom im Sinne einer Verringerung des Strahlstroms einwirkt. Der Temperaturfühler wird in Form eines temperaturabhängigen Widerstandes zusammen mit dem Spulenkörper, den Wicklungen und den Gleichrichterdioden in einen Kunststoffkörper eingegossen.

Die Erfindung beruht auf folgenden Erkenntnissen und Überlegungen. Der genannte extreme Belastungsfall läßt sich in der Praxis nicht ausschließen und muß bei der Bemessung der Strahlstrom-Begrenzungsschaltung berücksichtigt werden. Eine Gefährdung oder Zerstörung des Transformators ist aber einzig durch eine erhöhte Temperatur des Transformators möglich. Daher wird erfindungsgemäß die Temperatur des Hochspannungstransformators überwacht. Wenn die Temperatur des Transformators und damit auch die der Gleichrichterdioden einen bestimmten Wert überschreitet, wird der Strahlstrom im Sinne einer Regelschleife so zurückgeregelt, daß sich auch während des extremen Belastungsfalls eine zulässige Temperatur am Transformator von z.B. 100° einstellt.

Die erfindungsgemäße Lösung hat mehrere Vorteile. Da eine bevorstehende Gefährdung des Hochspannungstransformators in einem extremen Belastungsfall durch die Temperaturüberwachung erkannt und aufgefangen wird, kann für den Normalbetrieb mit bewegten Bildern ein höherer Strahlstrom zugelassen und somit ein helleres Bild erzielt werden, ohne daß für den Transformator eine Gefahr besteht. Der Hochspannungstransformator bleibt durch die Temperaturkontrolle in allen Fällen geschützt. Insbesondere können die Gleichrichterdioden keine unzulässig hohe Temperatur erreichen und der Kern des Transformators nicht in die Sättigung gelangen. Gegebenenfalls kann der Hochspannungstransformator kleiner und billiger aufgebaut sein. Die erfindungsgemäße Maßnahme erfordert nur wenige Bauteile, z.B. einen temperaturabhängigen Widerstand, einen ohmschen Widerstand und eine Diode. Das Gerät selbst wird praktisch unzerstörbar, selbst wenn es im extremen Fall bei +40°C Umgebungstemperatur unter schlechten Kühlbedingungen über eine Vielzahl von Stunden mit einem vollständig weißen Bild betrieben wird. Die Helligkeit wird in dem genannten extremen Belastungsfall verringert. Das ist aber praktisch kein Nachteil, da bei dem genannten extremen Belastungsfall ohnehin kein normales Bild vorliegt, die Änderung der Helligkeit bei geeigneter Bemessung unmerkbar langsam erfolgt und dieser Fall bei einem bestimmten Gerät in der Regel nur selten oder niemals auftritt.

Die von dem Temperaturfühler gesteuerte Schaltung ist vorzugsweise so bemessen, daß sie bei einem Langzeit-Strahlstromverhalten aufgrund von bewegten Bildern mit normaler durchschnittlicher Helligkeit nicht anspricht. Der Temperaturfühler wird vorzugsweise durch einen temperaturabhängigen Widerstand, einen sogenannten NTC- oder PTC-Widerstand, gebildet. Derartige Widerstände sind handelsüblich und preiswert. Die Enden des Widerstandes sind dabei mit zwei Anschlußklemmen des Transformators verbunden. Es hat sich gezeigt, daß bei dieser Lösung die Temperatur des Widerstandes mit ausreichender Genauigkeit und Zeitkonstante der Temperatur der Gleichrichterdioden folgt. Die Temperatur an dem temperaturabhängigen Widerstand ist also ein echtes Maß für die Temperatur der Gleichrichterdioden.

Bei einer anderen Ausführungsform der Erfindung liegt der temperaturabhängige Widerstand eng an dem Kern des Transformators an. Auch dadurch wird erreicht, daß die Temperatur des Widerstandes genügend genau und schnell der Temperatur der Gleichrichterdioden folgt. Diese Anordnung hat den Vorteil, daß der Kernn spannungsmäßig auf Erdpotential, also nicht im Hochspannungsbereich liegt und somit keine Isolationsprobleme bei dem temperaturabhängigen Widerstand entstehen.

Der Widerstand kann auch zwischen dem Kern und einer den Transformator tragenden gedruckten Leiterplatte liegen. Dabei ist die Anordnung so getroffen, daß die Wärme von dem Kern möglichst gut auf den Widerstand, aber möglichst wenig auf die gedruckte Leiterplatte und die darauf enthaltenen Leiterbahnen übertragen wird.

Der temperaturabhängige Widerstand kann auch in einer Aussparung wie einer Kerbe an einer Oberfläche des Kerns liegen. Dadurch kann der Wärmekontakt zwischen dem Kern und dem Widerstand noch verbessert werden, indem der Kern mit dem Widerstand etwa über 180° dessen Umfang unmittelbar in Berührung steht. Der temperaturabhängige Widerstand kann auch in einen Kunststoffkörper eingebettet sein, der zwischen dem Kern und der Leiterplatte eingefaßt ist.

Vorzugsweise bildet der Temperaturfühler Teil eines Netzwerkes, das über eine Schwellwertschaltung mit einer den Strahlstrom beeinflussenden Steuerklemme einer Bildröhren-Ansteuerschaltung verbunden ist. Bei einer Ausführungsform liegt die Reihenschaltung des temperaturabhängigen Widerstandes und eines weiteren ohmschen Widerstandes zwischen einer Betriebsspannung und Erde, und der Mittelpunkt der Reihenschaltung ist über eine Diode mit der den Strahlstrom beeinflussenden Steuerklemme verbunden.

Die Erfindung wird im folgenden anhand der Zeichnung erläutert. Darin zeigen
- Fig. 1: ein Beispiel einer erfindungsgemäßen Schaltung,
- Fig. 2: eine Abwandlung der Schaltung nach Fig. 1,
- Fig. 3: eine konstruktive Lösung für die Anbringung des Temperaturfühlers an dem Hochspannungstransformator,
- Fig. 4: eine andere Anordnung des Temperaturfühlers an dem Transformator und
- Fig. 5: ein die erfindungsgemäße Schaltung beinhaltendes Blockschaltbild.

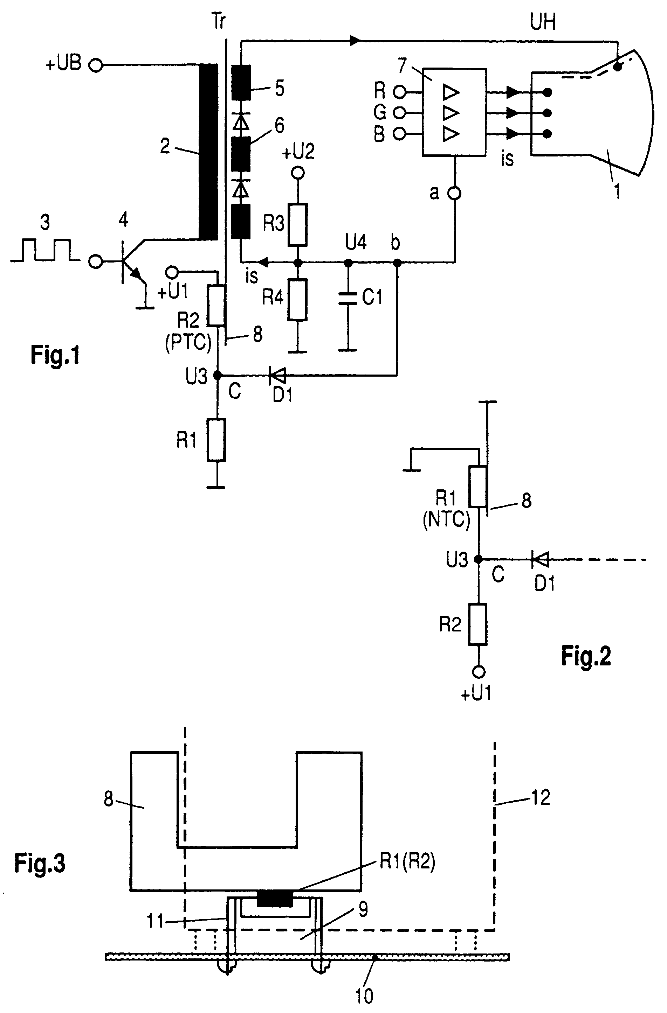

Fig. 1 zeigt den Hochspannungstransformator Tr, der die Hochspannung UH für die Bildröhre 1 eines Fernsehempfängers liefert. Die Primärwicklung 2 des Transformators Tr ist mit der Betriebsspannung +UB und über einen durch die Schaltspannung 3 periodisch betätigten Schalttransistor 4 mit Erde verbunden. Die Hochspannungswicklung 5 ist als Diodensplitwicklung mit mehreren Hochspannungsgleichrichterdioden 6 ausgebildet. Die Steuersignale R,G,B werden der Bildröhre 1 über die Video-Endverstärker 7 zugeführt und steuern die Strahlströme is in der Bildröhre 1.

Zusätzlich ist eine Schaltung zur Begrenzung des Strahlstromes is mit den Widerständen R3 und R4 sowie dem Kondensator C1 vorgesehen. Die Widerstände R3 und R4 bilden einen Spannungsteiler mit dem Siebkondensator C1. Der Widerstand R3 ist an die Betriebsspannung +U2 angeschlossen und wirkt als Stromquelle. Wenn der über den Widerstand R4 fließende Strahlstrom is null ist, fließt nur ein Strom von +U2 über den Widerstand R3 in den Widerstand R4 und erzeugt am Punkt b eine Spannung U4. Die Hochspannungswicklung 5 übernimmt einen Teil des Stromes durch den Widerstand R3 und verringert dadurch die Spannung über dem Widerstand R3 auf niedrigere oder sogar negative Werte. Die Spannung U4 ist als Stellgröße für die Strahlstrombegrenzung an die Steuerklemme a der Videoverstärker 7 angelegt. Die soweit beschriebene Schaltung ist bekannt.

Zusätzlich sind jetzt die Reihenschaltung aus dem PTC-Widerstand R2 und dem Widerstand R1 zwischen der Betriebsspannung +U1 und Erde sowie die Diode D1 vorgesehen. Der Widerstand R2 liegt eng an dem Ferritkern 8 des Transformator Tr an. Der Spannungsteiler aus den Widerständen R1, R2 liefert somit eine Spannung, die von der jeweiligen Temperatur des Ferritkerns 8 abhängig ist. Unter normalen Bedingungen, also bei Vorliegen eines bewegten normalen Fernsehbildes, ist die Spannung U3 größer als die Spannung U4, so daß der Punkt c durch die gesperrte Diode D1 von dem Punkt b entkoppelt ist. Wenn die Temperatur des Transformators Tr, somit auch die Temperatur des Ferritkerns 8 und des Widerstandes R2 steigt, wird R2 niederohmiger, so daß die Spannung U3 abfällt. Wenn eine bestimmte Temperatur überschritten wird, wird schließlich die Spannung U3 kleiner als die Spannung U4 und somit die Diode D1 leitend. Dann fließt ein Teil des vom Widerstand R3 kommenden Stromes über die leitende Diode D1 und nicht mehr durch die Hochspannungswicklung 5. Das bedeutet, daß der Schwellwert des Strahlstrombegrenzers langsam abnimmt und somit die übertragene Leistung in erwünschter Weise verringert wird. Es handelt sich dabei um eine geschlossene Schleife, wobei die Verluste im Ferritkern 8 zusammen mit der übertragenen Leistung verringert werden und die Temperatur auf einen absoluten, für den Transformator nicht mehr gefährlichen Wert herabgeregelt und stabilisiert wird. Der Spannungsteiler aus den Widerständen R1 und R2 bestimmt den Punkt, in dem die von der Temperatur des Transformators Tr gesteuerte Strahlstrombegrenzung aktiv wird.

Fig. 2 zeigt eine Abwandlung der Schaltung nach Fig. 1. Anstelle des PTC-Widerstandes R2 ist der Widerstand R1 als NTC-Widerstand ausgebildet und an dem Ferritkern 8 angeordnet. Die Wirkungsweise ist praktisch die gleiche wie in Fig. 1. Wenn die Temperatur des Ferritkerns 8 steigt, wird der Widerstand R1 hochohmigiger, so daß wie in Fig. 1 die Spannung U3 am Punkt c sinkt und schließlich oberhalb einer bestimmten Temperatur die Diode D1 leitend wird und die Strahlstrombegrenzung auslöst.

Fig. 3 zeigt die Anordnung des Widerstandes R1 gemäß Fig. 2 oder R1 gemäß Fig. 2 an dem Ferritkern 8. Der Widerstand R1 oder R2 ist in einen Kunststoffkörper 9 eingebettet, der zwischen der Unterkante des Ferritkerns 8 und der gedruckten Leiterplatte 10 liegt und von der Klammer 11 gehalten wird. Das Gehäuse des Hochspannungstransformators Tr ist symbolisch durch den Kunststoffkörper 12 angedeutet.

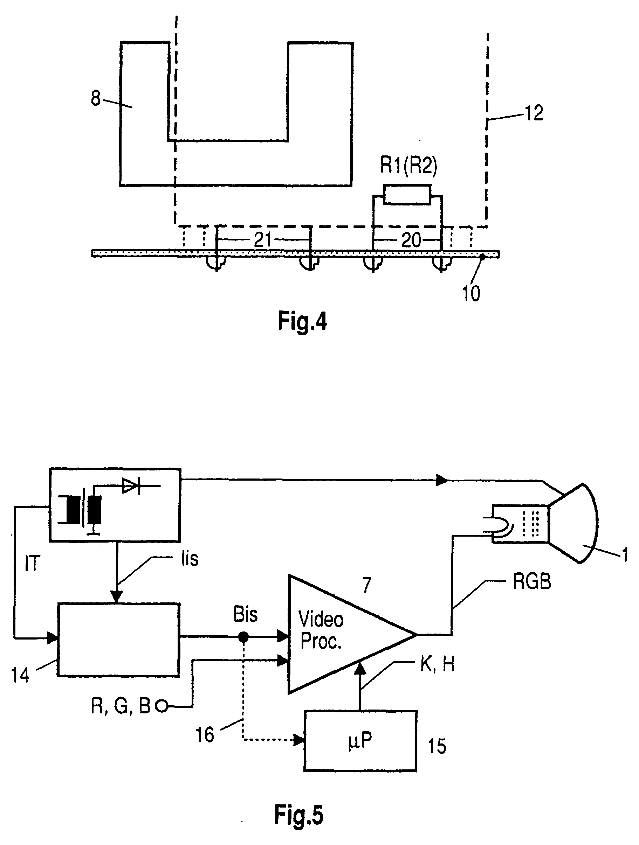

In Fig. 4 ist der temperaturabhängige Widerstand R1 oder R2 mit in den Kunststoffkörper 12 eingegossen, in den auch der Spulenkörper, die darauf angeordnete Primärwicklung 2, die Sekundärwicklung 6 und gegebenenfalls Zusatzwicklungen sowie die Hochsspannungsleichrichterdioden eigegossen sind. Die Enden des Widerstandes R1 oder R2 sind mit zwei zusätzlichen Anschlußpins 20 vebunden, die in entsprechende Leiterbahnen auf der gedruckten Leiterplatte 10 eingreifen und die Schaltung des Widerstandes R1 oder R2 gemäß Fig. 1 oder 2 bewirken. Der Kunststoffkörper 12, der das eigentliche Gehäuse des Transformators darstellt, enthält weiterhin eine Vielzahl von Anschlußpins 21 für die Primärwicklung die Hochspannungswicklung sowie gegebenenfalls weitere Zusatzwicklungen. Die Anschlußpins 21 sind ebenfalls mit entsprechenden Leiterbahnen auf der Unterseite der Leiterplatte 10 verbunden. Diese Anordnung des Widerstandes R1 oder R2 in der Vergußmasse des Kunstoffkörpers 12 ohne ummittelbare Anlage an dem Kern 8 gewährleistet ebenfalls, daß der Widerstand R1 oder R2 mit ausreichender Genauigkeit und Zeitkonstante der Temperatur der in den Kunststoffkörper 12 eingegossenen Hochspannungsgleichrichterfdioden folgt.

Fig. 5 zeigt ein vereinfachtes Blockschaltbild der Bildröhren-Steuerschaltung des Fernsehempfängers, das die erfindungsgemäße Lösung gemäß Fig. 1 bis 4 beinhaltet. Die Hochspannungstufe 13, die unter anderem den Tranformator Tr beinhaltet, liefert die Hochspannung UH für die Bildröhre 1, die Information IT über die Temperatur des Ferritkerns 8 und die Information Iis über den jeweiligen Wert des Strahlstroms is an die Interface-Schaltung 14. Die Schaltung 14 liefert die Stellgröße Bis für die Strahlstrombegrenzung an den Videoprozessor 7, der die Steuersignale R,G,B an die Bildröhre 1 liefert. Die Signale R,G,B werden dem Videoprozessor 7 von einer bekannten Signalverarbeitungsschaltung zugeführt. Der Mikroprozessor 15 liefert Steuersignale für den Kontrast K und die Helligkeit H an den Prozessor 7. Die punktiert dargestellte Leitung 16 kann wahlweise zusätzlich angewendet werden, da die Regelschleife über den Mikroprozessor 15 geschlossen sein kann. Dieser ist ebenfalls in der Lage, den Strahlstrom durch Einstellung von Kontrast und Helligkeit zu steuern, wie dieses im allgemeinen innerhalb des Videoprozessors 7 erfolgt.

## Patentansprüche

1. Schaltung zur Begrenzung des Strahlstroms einer Bildröhre (1) in einem Fernsehempfänger mit einem die Hochspannung (UH) für die Bildröhre (1) liefernden Transformator (Tr) und einer Strahlstrom-Steuerschaltung (7), an deren Steuerklemme (a) eine den Strahlstrom (is) stellende Spannung angelegt ist, und mit einem Temperaturfühler (R1, R2), der oberhalb einer bestimmten Temperatur auf die Steuerschaltung (7) im Sinne einer Verringerung des Strahlstroms (is) einwirkt, **dadurch gekennzeichnet, daß** der Temperaturfühler zusammen mit dem Spulenkörper, den Wicklungen (2, 5) und den Hochspannungsgleichrichterdioden (6) des Transformators (Tr) in denselben Kunststoffkörper. (12) eingegossen ist.

2. Schaltung nach Anspruch 1, **dadurch gekennzeichnet, daß** die von dem Temperaturfühler (R1, R2) gesteuerte Schaltung so bemessen ist, daß sie bei einem Langzeit-Strahlstromverhalten aufgrund von bewegten Bildern mit normaler durchschnittlicher Helligkeit nicht anspricht.

3. Schaltung nach Anspruch 1, **dadurch gekennzeichnet, daß** der Temperaturfühler durch einen temperaturabhängigen Widerstand (R1, R2) gebildet ist.

4. Schaltung nach Anspruch 1, **dadurch gekennzeichnet, daß** die Anschlüsse des Temperaturfühlers mit Anschlußpins des Hochspannungstransformator (Tr) verbunden sind.

## Claims

1. Circuit for limiting the beam current of a cathode ray tube (1) in a television receiver having a transformer (Tr) which supplies the high tension (UH) for the cathode ray tube (1) and having a beam current control circuit (7) to whose control terminal (a) a voltage which is dependent on the beam current (is) is applied and having a temperature sensor (R1, R2) which acts on the control circuit (7) above a specific temperature for the purpose of reducing the beam current (is) **characterized in that** the temperature sensor is potted in the same plastic body (12) together with the coil former, the windings (2, 5) and the high-tension rectifier diodes (6) of the transformer (Tr).

2. Circuit according to claim 1, **characterized in that** the circuit, which is controlled by the temperature sensor (R1, R2) is dimensioned such that it does not respond in the case of a long-term beam current behaviour due to moving pictures having a normal average brightness.

3. Circuit according to claim 1, **characterized in that** the temperature sensor is formed by a temperature-dependent resistor (R1, R2).

4. Circuit according to claim 1, **characterized in that** the connections of the temperature sensor are connected to connecting pins of the high-tension transformer (Tr).

## Revendications

1. Circuit pour la limitation de courant de faisceau d'un tube image (1) dans un téléviseur, présentant un transformateur (Tr) délivrant la haute tension (UH) pour le tube image (1) et un circuit de commande de courant de faisceau (7) possédant une borne de commande (a) au niveau de laquelle est appliquée une tension qui place le courant de faisceau (is) et présentant une sonde de température (R1, R2) qui informe le circuit de commande de réduire le courant de faisceau (is) lorsqu'une température définie est dépassée, **caractérisé en ce que** la sonde de température est insérée dans le même corps plastique (12), avec l'armature de la bobine, les enroulements (2, 5) et les diodes du redresseur haute tension (6) du transformateur (Tr).

2. Circuit conforme à la revendication 1, **caractérisé en ce que** le circuit commandé par la sonde de température (R1, R2) est dimensionné de sorte qu'il ne se déclenche pas pour des images en mouvement avec luminosité moyenne, dans le cas d'un comportement à long terme.

3. Circuit conforme à la revendication 1, **caractérisé en ce que** la sonde de température est constituée d'une résistance (R1, R2) variable avec la température.

4. Circuit conforme à l'une des revendications 1, **caractérisé en ce que** les connexions de la sonde de température sont reliées à des broches de connexion du transformateur haute tension (Tr).
